# EUROPEAN PATENT SPECIFICATION

(11) **EP 2 924 318 B1**
(45) Date of publication and mention of the grant of the patent: **28.06.2017**
(21) Application number: 13857287.0
(22) Date of filing: 11.11.2013
(51) Int. Cl.: F16H 3/091, F16H 57/04

(54) **TRANSMISSION**
GETRIEBE
TRANSMISSION

(30) Priority: 21.11.2012 WO PCT/JP2012/007508
(43) Date of publication of application: 30.09.2015
(73) Proprietor: Aisin AI Co., Ltd., Nishio-shi, Aichi 445-0006 (JP)
(72) Inventor: ITOH, Atsushi, Nishio-shi Aichi 445-0006 (JP)
(74) Representative: TBK
(86) International application number: PCT/JP2013/006626
(87) International publication number: WO 2014/080589

(56) References cited:
- EP-A1- 0 212 182
- EP-A2- 2 213 396
- JP-A- 2011 007 210
- JP-A- 2011 064 211
- JP-Y2- S 645 158
- JP-Y2- H0 517 487
- JP-Y2- H0 720 432
- US-A- 4 398 432

## Description

### Technical Field

The present invention relates to a method of manufacturing an output shaft for a transmission.

### Background Art

A transmission of the related art has an input shaft to which rotating power from an engine is input, an output shaft, and a gear shift mechanism having gear trains provided on the input and output shafts and a gear train selecting mechanism which selects one of the gear trains (for example, Patent Literature 1). The gear trains have input-shaft gears meshing with output-shaft gears, and one of the input-shaft and output-shaft gears is relatively unrotatably disposed on the shaft, and the other is relatively rotatably (idle-able) disposed. The gear train selecting mechanism is a mechanism which disengages/engages the gears relatively rotatably disposed from/with the shaft. The idle-able gears are distributed and disposed on the input shaft and the output shaft.

### Citation List

### Patent Literature

Patent Literature 1: JP 2012 162214 A (Fig. 1)
Patent Literature 2: JP H05 17487 A (Fig. 1)
Patent Literature 3: JP H07 20432 A (Fig. 1)
Patent Literature 4: JP S64 5158 A (Fig. 1)

Further transmissions are known from the closest prior art document US 4 398 432 A, JP 2011 064211 A, EP 0 212 182 A1 and JP 2011 007210 A.

### Summary of Invention

### Technical Problem

In such a transmission, the shafts need to be processed by forming a spline or the like therein in order to dispose the idle-able gears and the gear train selecting mechanism on both the input and output shafts. For this reason, the processing cost increases.

In addition, since the idling gears and the gear train selecting mechanism need to be lubricated, lubricating mechanisms need to be provided on both the input and output shafts and the number of parts increases. Further, a gear shift mechanism in which idling gears are used as all output-shaft gears is disclosed (Patent Literature 2). However, one of bearings of the output shaft is provided between gears 9b and 10b, and a case is divided in threes from the viewpoint of assembling facility. For this reason, an increase in the number of parts of the case is one of factors that increase a cost. A gear shift mechanism in which bearings are provided at both ends of a shaft is disclosed in Patent Literature 3; however, the gear shift mechanism disclosed in Patent Literature 3 has a configuration in which one shaft has only two gear train selecting mechanisms, and in an attempt to collectively dispose all gear train selecting mechanisms (three or more gear train selecting mechanisms) in a 4 or more -speed forward gear shift mechanism on one shaft, at least one of bearings is not disposed at an end as described in Patent Literature 2, and it has been usual to dispose a gear at the end (Patent Literature 4 is not a gear shift mechanism in which idling gears are collectively disposed on one side, but is given as the related art in which the positions of bearings can be easily understood).

The present invention has been completed in consideration of the above circumstances, and a problem to be solved is to provide a method of manufacturing an output shaft for a transmission so that a transmission can be provided which can reduce a processing cost and the number of parts.

### Solution to Problem

The object is achieved with a method of manufacturing an output shaft for a transmission according to claim 1. Further advantageous developments of the invention are subject-matter of the dependent claims.

### Advantageous Effect of Invention

A transmission having an output shaft manufactured according to the method of the present invention is simply configured to make it possible to reduce the processing cost and the number of parts.

### Brief Description of Drawings

Fig. 1 is a partially sectional view of a transmission according to the present invention.
Fig. 2 is a sectional view of an output shaft employed in the transmission according to the present invention.
Fig. 3 is a sectional view for explaining a gear train selecting mechanism employed in the transmission according to the present invention.
Fig. 4 is a pattern diagram for explaining a method of manufacturing the output shaft in the transmission according to the present invention.
Fig. 5 is a pattern diagram for explaining the method of manufacturing the output shaft in the transmission according to the present invention (sectional view along a V-V line in Fig. 4).
Fig. 6 is a pattern diagram for explaining the method of manufacturing the output shaft in the transmission according to the present invention.
Fig. 7 is a schematic view of an output shaft according to a modification having a uniform diameter, which modification is not claimed but useful for understanding the invention.

### Description of Embodiments

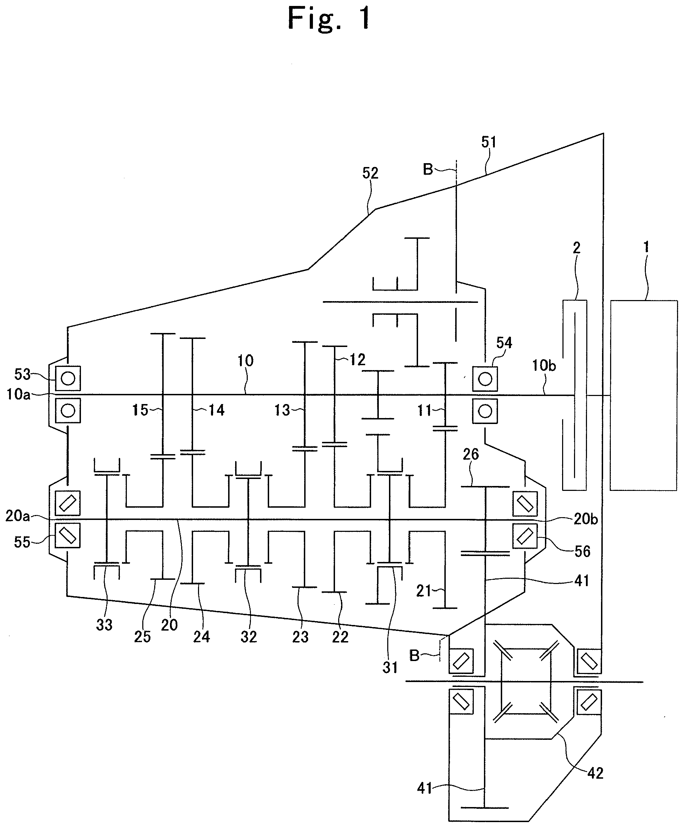

A typical embodiment of a transmission according to the present invention will be described with reference to Fig. 1. The transmission according to the embodiment is mounted on a vehicle. Note that hatching applied to sectional portions in the drawings used in the following description is only applied to necessary sites.

### · Configuration

As shown in Fig. 1, a transmission according to a first embodiment has an input shaft 10, an output shaft 20, input-shaft gears 11 to 15, output-shaft gears 21 to 25, gear train selecting mechanisms 31 to 33, and case members 51 and 52.

Rotating power output from an internal combustion 1 (engine) is input to the input shaft 10 through a clutch 2. The input shaft 10 has the input-shaft gears 11 to 15 (first speed to fifth speed) integrally formed from an other-end side in this order. The input shaft 10 is supported by the case members 51 and 52 at a one-end 10a and an other-end 10b through bearings 53 and 54.

The rotating power input to the input shaft 10 is transmitted to the output shaft 20 through the gear trains (11 to 15 and 21 to 25) and output to a ring gear 41 through an output gear 26. The ring gear 41 outputs the rotating power to a drive shaft (not shown) through a differential device 42. The output shaft 20 is supported by the case members 51 and 52 at a one-end 20a and an other-end 20b through bearings 55 and 56.

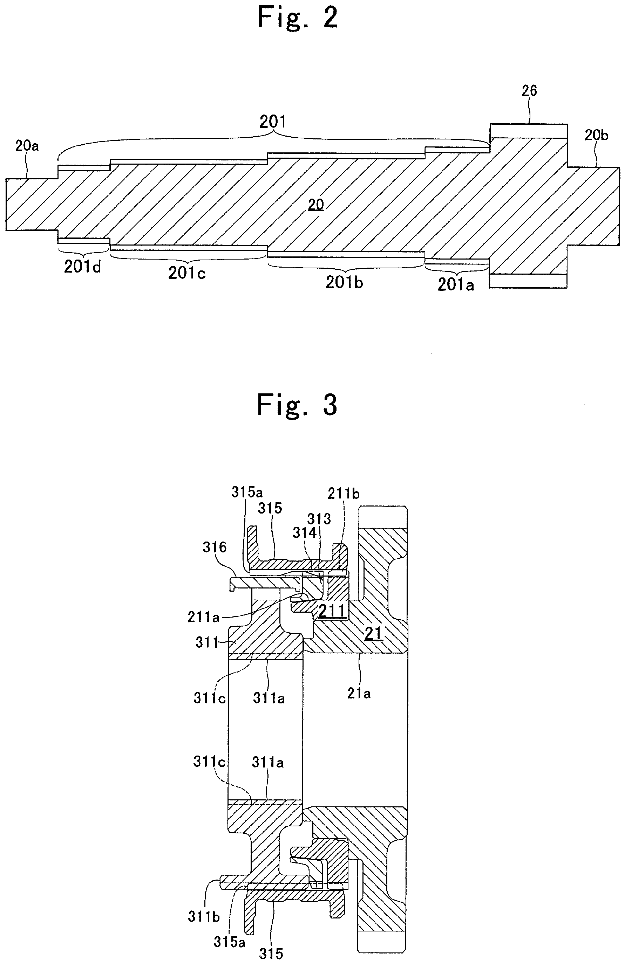

The output shaft 20 has the output gear 26 integrally formed on the other-end 20b side, and a spline 201 (see Fig. 2) formed on the periphery from the output gear 26 to the one-end 20a side. An outer diameter of the spline 201 of the output shaft 20 is stepwisely reduced in four steps (201a to 201d) from the other-end 20b side. Although the degree of reduction in diameter is not limited, the diameter is preferably set to be about a full tooth length of a spline tooth formed to sufficiently strengthen the narrowest portion (a portion on which a spline 201 d is formed), and the full tooth length is also desirably decreased as much as possible. Splines 201a to 201d are continuously provided. Here, the continuously providing the splines means that the splines are roughly entirely formed except that the adjacent splines form members which form members necessary for causing the shaft to function as an output shaft, the members being configured by a flow path causing lubricant to flow, a groove in which a snap ring provided to position a gear and a clutch hub is fitted, and the like.

The output shaft 20 has the output-shaft gears 21 to 25 (first speed to fifth speed) sequentially disposed from the other-end 20b side in this order. The output-shaft gears 21 to 25 are always in mesh with the input-shaft gears 11 to 15, respectively, and are idly disposed on the output shaft 20. The output-shaft gear 21 is disposed on a site of the spline 201 a, the gear train selecting mechanism 31, the output-shaft gear 22, and the output-shaft gear 23 are disposed on a site of the spline 201b, the gear train selecting mechanism 32, the output-shaft gear 24, and the output-shaft gear 25 are disposed on a site of the spline 201 c, and the gear train selecting mechanism 33 is disposed on a site of the spline 201d.

Among the output-shaft gears 21 to 25, the output-shaft gears 21 and 22 are selectively disengaged/engaged from/with the output shaft 20 by the gear train selecting mechanism 31 disposed between the output-shaft gears 21 and 22, the output-shaft gears 23 and 24 are selectively disengaged/engaged from/with the output shaft 20 by the gear train selecting mechanism 32 disposed between the output-shaft gears 23 and 24, and the output-shaft gear 25 is selectively disengaged/engaged from/with the output shaft 20 by the gear train selecting mechanism 33 disposed on the one-end 20a side. That is, the output-shaft gear 21, the gear train selecting mechanism 31, the output-shaft gear 22, the output-shaft gear 23, the gear train selecting mechanism 32, the output-shaft gear 24, the output-shaft gear 25, and the gear train selecting mechanism 33 are disposed in this order from the other-end 20b side of the output shaft 20 toward the one-end 20a side thereof.

The output-shaft gear 21 has a gear piece 211 integrated on the side to which the gear train selecting mechanism 31 is adjacent. On the periphery of the gear piece 211, an engagement tooth 211a and an engagement surface 211b are formed toward the gear train selecting mechanism 31 in this order (see Fig. 3). The output-shaft gears 22 to 25 also have gear pieces provided on the sides to which the gear train selecting mechanisms 31 to 33 are adjacent.

An internal surface of each of bearings 21 a to 25a of the output-shaft gears 21 to 25 abuts on tooth tops of the spline 201 (201 a to 201 c) formed on the periphery of the output shaft 2 (in Fig. 3, although an adjacent clutch hub 311 is engaged with the spline 201b by a spline bearing 311 a, the clutch hub is formed to have almost the same diameter as that of a tooth bottom 311 c of the spline bearing 311 a). Lubricant is held in tooth grooves of the spline 201 to achieve lubrication.

As shown in Fig. 3, the gear train selecting mechanism 31 has the clutch hub (corresponding to a hub) 311, a sleeve 315, and a synchronizer ring 313. Fig. 3 shows a state in which the output-shaft gear 21 of the first speed is selected (the sleeve 315 slides to the right in the drawing, and a sleeve engagement tooth 315a of the sleeve 315 is in mesh with a hub engagement tooth 311b of the clutch hub 311, a synchronizer ring engagement tooth 314 of the synchronizer ring 313, and the engagement tooth 211a of the gear piece 211. In Fig. 3, an upper part in the drawing of the clutch hub 311 is a sectional view of a portion in which a synchro key 316 is provided). The clutch hub 311 is fixed to the periphery of the output shaft 20. According to this fixation, the spline bearing 311 a provided on the clutch hub 311 meshes with the spline 201 provided on the periphery of the output shaft 20 to fix a rotating direction. With respect to axial fixation, the clutch hub 311 abuts on a step (a step between the spline 201 a and the spline 201b) of the spline 201 provided on the periphery of the output shaft 20 to position and fix the other-end 20b side. Then, the one-end side is axially fixed, for example by providing a circumferential groove in the circumferential direction of the output shaft 20 and fitting a snap ring in the circumferential groove. Each of the gear train selecting mechanisms 32 and 33 has the same configuration as that of the gear train selecting mechanism 31 except that the gear train selecting mechanisms are disposed at different positions. Specifically, the gear train selecting mechanism 32 is disposed on the spline 201 c so as to abut on the step between the spline 201 c and the spline 201b, and the gear train selecting mechanism 33 is disposed on the spline 201d so as to abut on the step between the spline 201 d and the spline 201 c.

The case members 51 and 52 are integrated with each other such that the first case member 51 and the second case member 52 are combined to each other on a dividing face B. The first case member 51 supports, on the right in the drawing (internal combustion side), the other-end 10b side and the other-end 20b side of the input shaft 10 and the output shaft 20 by the bearings 53 to 56. Here, the gear trains of the first speed to the fifth speed are sequentially aligned from the right in the drawing. For this reason, the input-shaft gears 11 to 15 have diameters increased toward the left in the drawing, and the output-shaft gears 21 to 25 have diameters decreased toward the left in the drawing. Here, since the vicinities of the upper portions of the input-shaft gears 11 to 13 on the right in the drawing has a space larger than that on the left in the drawing because a driving unit that drives the gear train selecting mechanism 31 is provided on the input shaft 10 side, the size of a body of the upper portion of the second case member 52 can be reduced. In addition, since on the output shaft 20 side, the second case member 52 is formed in a shape following the outer shapes of the output-shaft gears 21 to 25, the size of a body of the second case member 52 can be reduced toward the left in the drawing. Since a mechanism located inside the second case member 52 (the output-shaft gears 21 to 25, the driving unit of the gear train selecting mechanism 31, and the like on the outermost side) can be shaped such that the size of the mechanism is reduced as a whole toward the left, the second case member 52 can be assembled such that the second case member covers the mechanism without being hooked from the left side in the drawing. For this reason, even though the assembling facility is considered, an excessive space need not be provided in the second case member 52, and, consequently, a minimum necessary body can be employed as the outer shape of the second case member 52. That is, the gear trains of the first to fifth speeds are arranged from the right toward the left in the drawing to make it possible to reduce the size of the body of the second case member 52.

Note that the splines need not be stepwisely formed on the output shaft, and the diameters of portions that form the splines can also be made the same in the axial direction. In this case, circumferential grooves are formed on both the sides of the clutch hub 311 in the axial direction, and snap rings are fitted in both the circumferential grooves to prevent the clutch hub 311 from moving in the axial direction.

### · Method of manufacturing output shaft 20 on which stepwise splines are formed

A method of manufacturing the output shaft 20 on which stepwise splines are formed (hereinafter, simply referred to as a "stepwise output shaft 20") will be described below. The method of manufacturing the output shaft can be achieved by rolling or cutting. For example, the splines 201a to 201d can be manufactured by preparing a die corresponding to each of the splines.

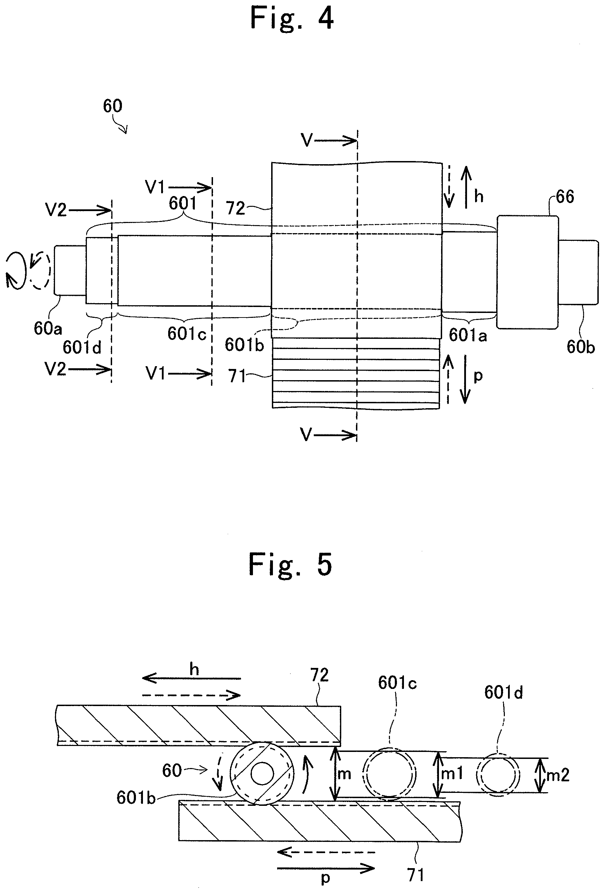

Here, rolling dies (rack type, roller type, or the like) can be shared for each of the splines 201a to 201 d. That is, the rolling dies used in rolling can be shared such that the pressure angles and the modules in the splines 201a to 201d are made the same and only fractional figures are changed. Further, when one set of rolling dies (two or more) is employed, a difference in the number of teeth among the splines 201 a to 201d is a multiple of the number of rolling dies, and thus when the arrangement of the rolling dies is set such that the rolling dies are n-fold-symmetrical (n is the number of rolling dies) based on the output shaft including the phases of the rolling dies, the teeth of the splines 201 a to 201d can be sequentially appropriately formed by changing only distances between the rolling dies without changing the phases of the plurality of dies. For example, when rack-type dies are used, two rack-type dies make one set, and thus the differences in the number of teeth among the splines 201 a to 201d are made even numbers, and the dies are caused to abut on both the sides in the vertical direction with respect to the axial direction of the output shaft 20. The details will be described below with reference to Figs. 4 and 5. Here, the phases of the teeth of the two dies mean that the shapes of the teeth of the dies are two-fold-symmetrical based on a center of axle of an output shaft rough material 60. When three or more dies are used (roller type), the dies are n-fold-symmetrical corresponding to the number of dies n.

Rolling the splines 201a to 201d by using the rack type will be specifically described. The output shaft rough material 60 is manufactured first (Fig. 4). The output shaft rough material 60 has support shafts 64 and 65 provided at a one-end 60a and an other-end 60b, respectively, an output gear rough material 66 serving as a base of the output gear 26 adjacent to the support shaft 65 at the other-end 60b, and a spline rough material 601 of which the spline 201 is formed. The spline rough material 601 can be classified into four spline rough materials 601a to 601d, and has a diameter stepwisely reduced from the other-end 60b toward the one-end 60a. The degree of reduction in diameter is determined according to the degree of reduction in diameter in the splines 201a to 201d. The output shaft rough material 60 can be formed from a wire rod by pressing, cutting, and the like.

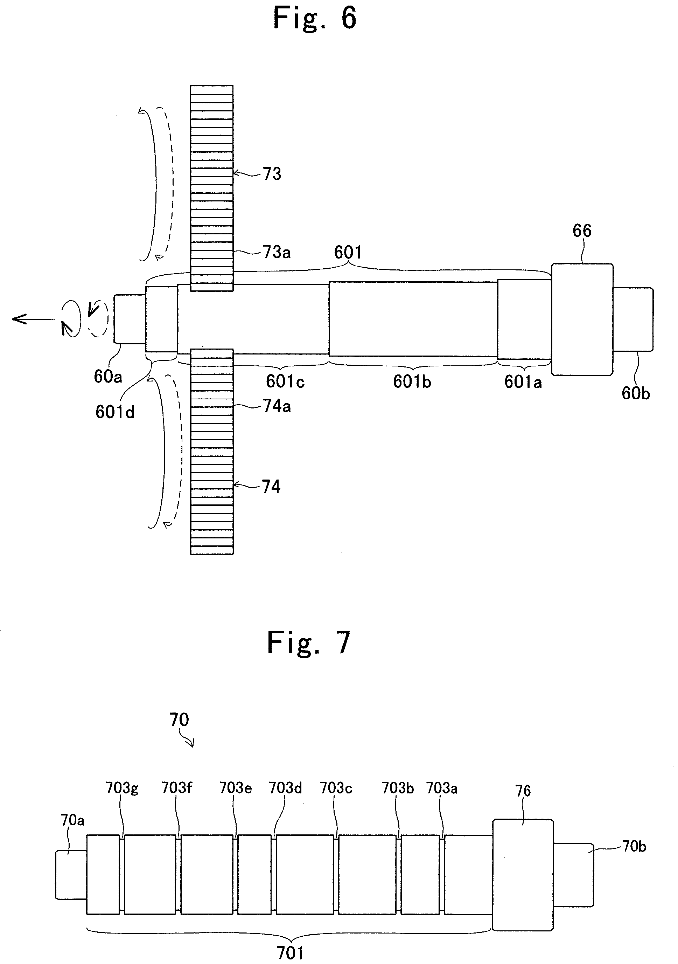

The support shafts 64 and 65 are supported by using a center of axle as a rotation center with respect to the manufactured output shaft rough material 60. Thereafter, the spline rough materials 601a to 601d are processed into the spline 201 in order from the spline rough material 601d (in Fig. 4 , a portion of the spline rough material 601b is being processed). At this time, rolling is performed by using rack-type dies 71 and 72. The rack-type dies 71 and 72 are adapted to move symmetrically (in phase) based on the center of axle of the output shaft rough material 60. In the rack-type dies 71 and 72, an interval m corresponding to the portion of the spline rough material 601b shown in Fig. 5 is set to be the same as or slightly smaller than a tooth top circle diameter of a corresponding one of the splines 201 a to 201 d (for example, an interval corresponding to a portion of the spline rough material 601c is set to an interval m1 (for reference, a V1-V1 section of the output shaft rough material 60 in Fig. 4 is shown on the right in the drawing to explain the vertical interval m1. An original horizontal position is the same as the position of the spline rough material 601b shown in Fig. 5), and an interval corresponding to a portion of the spline rough material 601 d is set to an interval m2 (for reference, a V2-V2 section of the output shaft rough material 60 in Fig. 4 is shown on the right in the drawing to explain the vertical interval m2. An original horizontal position is the same as the position of the spline rough material 601b shown in Fig. 5)). In adjustment in a direction in which the interval is narrowed, each of the rack-type dies 71 and 72 is moved by the same distance toward the center of axle of the output shaft rough material 60. Here, relative positions of the tooth of the rack-type die 71, the tooth of the rack-type die 72, and the center of axle of the output gear rough material 66 in moving directions P of the rack-type dies 71 and 72 are moved such that rack-type dies 71 and 72 are two-fold-symmetrical based on the center of axle of the output gear rough material 66. Therefore, the relative relationship (phase) between the tooth of each of the rack-type dies 71 and 72 and the center of axle of the output gear rough material 66 does not change even when the interval changes. That is, the teeth of the spline 201 to be formed are two-fold-symmetrical based on the center of axle of the output shaft 20. Here, since the difference in the number of teeth of the spline 201 having different diameters is set to an even number to make it possible to equal the phases of the teeth of portions pressed in the rolling for the rack-type dies 71 and 72 to each other, the rack-type dies 71 and 72 can be easily adjusted. Note that in Figs. 4 and 5 used in the above description and Fig. 6 used in the following description, a backup roll or the like is not shown.

The rolling step is sequentially performed on the different-diameter portions of the spline 201 (in the embodiment, the rolling step is performed four times on the splines 201a to 201d) to form the spline 201. The order of performing the rolling processing is not limited, and the rolling processing may be started with a larger-diameter portion (spline rough material 601a), or conversely may be started with a smaller-diameter portion (spline rough materials 601d), or may be started in the middle (any of the spline rough materials 601b and 601c) regardless of the diameters.

Thereafter, an oil path, an oil groove, an oil passage, a circumferential groove, and the like are formed, and large-diameter polishing is performed on each of the splines 201a to 201d. Further, the output gear rough material 66 is processed to form the output gear 26. Further, as needed, heat treatment is performed on the tooth surfaces of the output gear 26 and the tooth surfaces of the spline 201. The heat treatment can be performed on a necessary site a necessary number of times when necessary. In addition, the order of performing the production of the output gear 26 and the production of the spline 201 may be reversed.

The case in which the rack-type dies are used as dies has been described; however, as shown in Fig. 6, the spline can also be similarly formed on the output shaft by using roller-type dies 73 and 74. When the roller-type dies 73 and 74 are employed, in place of performing rolling four times on the spline rough materials 601 a to 601d, the rolling can be sequentially performed by relatively axially moving the portions of the spline rough materials 601 a to 601d gradually from the portion of the spline rough material 601d toward the spline rough material 601a. In this case, when other-end sides 73a and 74a of the roller-type dies 73 and 74 reach a step, an interval between the dies 73 and 74 is increased to the next diameter to make it possible to continuously perform the rolling processing.

### (Modification not claimed but useful for understanding the invention)

As an output shaft, as shown in Fig. 7, an output shaft on which a spline 701 having the same diameter in an axial direction may also be used. In order to perform positioning in the axial direction when a clutch hub and an output-shaft gear are disposed on an output shaft, circumferential grooves 703a to 703g are formed at positions adjacent to the positions at which clutch hubs 311 to 313 and output-shaft gears 21 to 25 are disposed, respectively, and, after the clutch hubs 311 to 313 and the output-shaft gears 21 to 25 are disposed, snap rings are fitted in the circumferential grooves to complete the assembling. That is, in Fig. 7, the clutch hubs 311 to 313 and the output-shaft gears 21 to 25 are each inserted into the output shaft 70 from the left in the drawing. Since the same splines are formed, it is possible to smoothly insert the clutch hubs and the output-shaft gears. As a result, the output-shaft gear 21, the clutch hub 311, the output-shaft gear 22, the output-shaft gear 23, the clutch hub 312, the output-shaft gear 24, the output-shaft gear 25, and the clutch hub 313 are disposed in this order from an output gear 76 toward the left in the drawing such that snap rings are sandwiched therebetween to limit movement in the axial direction. Although the clutch hubs 311 to 313 and the output-shaft gears 21 to 25 each have slightly different internal diameters from those shown in Fig. 1, the configurations same as those shown in Fig. 1 can be employed for other configurations, and the description of such configurations is given with the same reference numerals as those in Fig. 1, for simplicity.

Since the widths of the dies can be increased by employing the modification, the spline 701 can be formed by rolling with a smaller number of steps as compared to the output shaft 20 on which steps are axially provided.

### (Appended)

(1) The output shaft for the transmission described above is an output shaft used in a transmission including an input shaft to which rotating power from an engine is input, an output shaft disposed at a position lower than that of the input shaft, and a gear shift mechanism having gear trains of a plurality of speeds having a plurality of input-shaft gears integrally provided on the input shaft and a plurality of output-shaft gears which are relatively rotatably provided on the output shaft and mesh with the corresponding input-shaft gears, one or more hub which is adjacent to the output-shaft gears and relatively unrotatably disposed on the output shaft, and gear train selecting mechanisms which disengage/engage the output-shaft gears from/with the hub, wherein
   the output shaft has splines formed on a peripheral surface of an entire site on which the output-shaft gears and the hub are disposed, and has an output gear in the vicinity of the other-end, and a site on which the splines are formed can have a diameter sequentially stepwisely increased from the one-end side to the other-end side.
   Employing such a mode, the hub or the output-shaft gears can be caused to abut on a step portion where the diameters of the splines change when the output-shaft gears are axially positioned. Since the splines are continuously formed on the periphery of the output shaft in a wide range, a shape for axial positioning is formed together with the formation of the spline, and thus a processing cost can be reduced.
(2) The output shaft for the transmission described above can further have the following configuration. That is, the hub has spline bearings spline-fitted in the splines of the output shaft,
   bearings of the output-shaft gears each have a cylindrical shape having an internal diameter set such that the internal surface thereof abuts on tooth tops of the splines, and are relatively rotatably disposed on the splines, respectively, and
   the hub is axially positioned such that the spline bearings thereof abut on an increased-diameter portion of the splines from the one-end side of the output shaft toward the other-end side thereof.
   In particular, since the hub is relatively unrotatably fixed to the output shaft, the hub can be positioned on the step portion of the spline with a small influence.
(3) The above-described method of manufacturing the output shaft for the transmission is a method of manufacturing an output shaft having a plurality of axially continuous splines with different diameters formed on a periphery thereof, including:
   a step of manufacturing an output shaft rough material having a shape obtained by axially continuously connecting cylindrical spline rough materials having a plurality of diameters corresponding to a final shape formed after the splines are provided; and
   a rolling step of sequentially rolling splines on a periphery of each of the spline rough materials by two or more dies while rotatably holding the output shaft rough material with a center of axle thereof being as an axis of rotation, wherein
   a difference in the number of teeth among the splines having different diameters is a multiple of the number of the dies,
   positions and phases of the dies are disposed to be rotationally symmetrical with respect to the center of axle of the output shaft rough material, and
   in the rolling step, the dies can perform rolling after distances from the center of axle of the output shaft rough material are similarly changed without changing a relative relationship between the phases to adjust the dies depending on the diameters of the spline rough materials.

Employing such a mode, the number of dies which occupy a large portion of the processing cost can be reduced.

### Industrial Applicability

The method according to the invention results in a transmission which is simply configured by having the above configurations to make it possible to reduce the processing cost and the number of parts.

## Claims

1. Method of manufacturing an output shaft (20) for a transmission, the output shaft having a plurality of axially continuous splines (201a to 201d) with different outer diameters formed on a periphery thereof, wherein the method includes the following steps:
a step of manufacturing an output shaft rough material (60) having a shape obtained by axially continuously connecting cylindrical spline rough materials (601a to 601d) having a plurality of diameters corresponding to a final shape formed after the splines are provided; and **characterized by** a rolling step of sequentially rolling splines on a periphery of each of the spline rough materials by two or more dies (71, 72; 73, 74) while rotatably holding the output shaft rough material with a center of axle thereof being as an axis of rotation, wherein
a difference in the number of teeth among the splines having different diameters is a multiple of the number of the dies,
positions and phases of the dies are disposed to be rotationally symmetrical with respect to the center of axle of the output shaft rough material, and
in the rolling step, the dies can perform rolling after distances from the center of axle of the output shaft rough material are similarly changed without changing a relative relationship between the phases to adjust the dies depending on the diameters of the spline rough materials.

2. Method of manufacturing an output shaft according to claim 1, wherein the outer diameters of the axially continuous splines are stepwisely reduced from an end (20b) side of the output shaft.

3. Method of manufacturing an output shaft according to claims 1 or 2, wherein diameters of a plurality of sites on which output shaft gears (22, 23, 24, 25) are formed are reduced and the plurality of axially continuous splines is sequentially formed thereon.

## Patentansprüche

1. Verfahren zum Herstellen einer Ausgangswelle (20) für ein Getriebe, wobei die Ausgangswelle eine Vielzahl von axial fortlaufenden Keilen (201a bis 201d) mit unterschiedlichen Außendurchmessern hat, die an einem Umfang von dieser ausgebildet sind, wobei das Verfahren die folgenden Schritte umfasst:
einen Schritt des Herstellens eines Ausgangswellenrohmaterials (60) mit einer Form, die durch axial fortlaufendes Verbinden von zylindrischen Keilrohmaterialien (601a bis 601d) erhalten wird, die eine Vielzahl von Durchmessern entsprechend einer endgültigen Form haben, die ausgebildet wird, nachdem die Keile vorgesehen sind; und
**gekennzeichnet durch**
einen Walzschritt des sequenziellen Walzens von Keilen an einem Umfang von jedem der Keilrohmaterialien durch zwei oder mehr Werkzeuge (71, 72; 73, 74), während das Ausgangswellenrohmaterial drehbar gehalten wird, wobei eine Achsenmitte von diesem eine Drehachse ist, wobei
ein Unterschied der Zähnezahl zwischen den Keilen, die unterschiedliche Durchmesser haben, ein Vielfaches der Anzahl der Werkzeuge ist,
Positionen und Phasen der Werkzeuge angeordnet sind, um mit Bezug auf die Achsenmitte des Ausgangswellenrohmaterials drehsymmetrisch angeordnet zu sein, und
in dem Walzschritt die Werkzeuge ein Walzen durchführen können, nachdem Abstände von der Achsenmitte des Ausgangswellenrohmaterials in gleicher Weise geändert worden sind, ohne eine relative Beziehung zwischen den Phasen zu ändern, um die Werkzeuge in Abhängigkeit der Durchmesser der Keilrohmaterialien einzustellen.

2. Verfahren zum Herstellen einer Ausgangswelle nach Anspruch 1, wobei sich die Außendurchmesser der axial fortlaufenden Keile von einer Seite des Endes (20b) der Ausgangswelle schrittweise verringern.

3. Verfahren zum Herstellen einer Ausgangswelle nach Anspruch 1 oder 2, wobei Durchmesser einer Vielzahl von Stellen, an denen Ausganswellenzahnräder (22, 23, 24, 25) ausgebildet werden, verringert sind und die Vielzahl von axial fortlaufenden Keilen an diesen sequenziell ausgebildet werden.

## Revendications

1. Procédé pour fabriquer un arbre de sortie (20) pour une transmission, l'arbre de sortie ayant une pluralité de cannelures axialement continues (201a à 201d) avec des diamètres externes différents formés sur sa périphérie, dans lequel le procédé comprend les étapes suivantes :
une étape pour fabriquer un matériau brut d'arbre de sortie (60) ayant une forme obtenue en raccordant de manière axialement continue les matériaux bruts de cannelure cylindrique (601a à 601d) ayant une pluralité de diamètres correspondant à une forme finale formée après avoir prévu les cannelures ; et
**caractérisé par** :
une étape de laminage pour laminer de manière séquentielle des cannelures sur une périphérie de chacun des matériaux bruts de cannelure par deux ou plusieurs matrices (71, 72 ; 73, 74) tout en maintenant, en rotation, le matériau brut d'arbre de sortie avec un centre de son essieu qui est un axe de rotation, dans lequel :
une différence dans le nombre de dents parmi les cannelures ayant des diamètres différents, est un multiple du nombre de matrices,
des positions et des phases des matrices sont disposées pour être symétriques en rotation par rapport au centre de l'essieu du matériau brut d'arbre de sortie, et
à l'étape de laminage, les matrices peuvent réaliser le laminage après avoir modifié de manière similaire les distances par rapport au centre d'essieu du matériau brut d'arbre de sortie sans modifier une relation relative entre les phases afin d'ajuster les matrices en fonction des diamètres des matériaux bruts de cannelure.

2. Procédé pour fabriquer un arbre de sortie selon la revendication 1, dans lequel les diamètres externes des cannelures axialement continues sont réduits par palier à partir d'un côté d'extrémité (20b) de l'arbre de sortie.

3. Procédé pour fabriquer un arbre de sortie selon les revendications 1 ou 2, dans lequel les diamètres d'une pluralité de sites sur lesquels les engrenages d'arbre de sortie (22, 23, 24, 25) sont formés, sont réduits et la pluralité de cannelures axialement continues est formée de manière séquentielle sur ces derniers.
